# EUROPEAN PATENT APPLICATION

(11) **EP 1 669 932 A1**
(43) Date of publication of application: **14.06.2006**
(21) Application number: 04747439.0
(22) Date of filing: 13.07.2004
(51) Int. Cl.: G06T 17/40, G06F 13/10

(54) **THREE-DIMENSIONAL VIRTUAL SPACE SIMULATOR, THREE-DIMENSIONAL VIRTUAL SPACE SIMULATION PROGRAM, AND COMPUTER READABLE RECORDING MEDIUM WHERE THE PROGRAM IS RECORDED**

(30) Priority: 16.09.2003 JP 2003323612
(71) Applicant: Japan Science and Technology Agency, Kawaguchi-shi, Saitama 332-0012 (JP)
(72) Inventor: NAKANISHI, Hideyuki, Kyoto 606-8204 (JP); ISHIDA, Toru, Nara 631-0801 (JP)
(74) Representative: Bentz, Jean-Paul
(86) International application number: PCT/JP2004/009973
(87) International publication number: WO 2005/029414

(57) **Abstract**

A three-dimensional virtual space simulator comprises a section for determining the action of an avatar according to the input by the user and generating action instruction data representing the content of the action, a section for determining the action of an agent autonomously and generating action instruction data representing the content of the action, and a process control section for displaying each character in a virtual space according to the action instruction data received from the sections wherein the process control section and a graphic process section share an interface for receiving the action instruction data from the avatar action instruction section, and an interface for receiving the action instruction data from the agent action instruction section. Consequently, a flexible participation mode of the user and high reliability are realized.

## Description

### TECHNICAL FIELD

The present invention relates to: a three-dimensional virtual space simulator that displays, in a three-dimensional image, a virtual space where a plurality of characters appear; a three-dimensional virtual space simulation program; and a computer-readable storage medium storing the program.

### BACKGROUND ART

As computers and network technologies have advanced, highly sophisticated simulators have been developed. One of the latest simulators is a three-dimensional virtual space simulator. For example, there has been proposed a three-dimensional virtual space simulator in which a client computer (i) obtains, through a network, three-dimensional graphic data stored in the WWW (World Wide Web) server and described in the VRML (Virtual Reality Modeling Language), and (ii) displays a three-dimensional virtual space image in a display unit of the client computer.

A three-dimensional image accurately provides the stereoscopic and spatial effects that a person experiences when he or she sees the real world. This enables a user to experience a realistic simulation using the three-dimensional virtual space simulator that displays a virtual space in a three-dimensional image. Such three-dimensional virtual space simulator has been applied to a field of entertainments such as chat or video games, and also to simulations such as a landscape simulation or a disaster simulation.

In the virtual space displayed by the three-dimensional virtual space simulator, normally, a plurality of characters (participants) appear. In the present description, a character who acts, in the virtual space displayed by the three-dimensional virtual space simulator, in response to an input made by a user will be referred to as an "avatar," whereas a character who autonomously acts in the virtual space will be referred to as an "agent." With the three-dimensional virtual space simulator, the user experiences the virtual reality mainly from a point of view of an avatar. Recently, a new way of using the three-dimensional virtual space simulator has been proposed. Specifically, in the virtual space displayed by the simulator, a user experiences a role-playing, created based upon an elaborate story, so as to be trained through the experience. (See: W. Swartout et. al., Toward the Holodeck: Integrating Graphics, Sound, Character and Story. International Conference on Autonomous Agents, pp. 409-416, 2001)

In a simulation of, for example, evacuation for a disaster situation, it is preferable that a large number of characters participate in the virtual space to accurately reproduce group dynamics of group action. Especially, in order to bring the action of the characters in the virtual space closer to that in the real world while allowing a large number of users to experience the simulation, it is preferable that as many avatars as possible participate in the virtual space.

However, with the conventional three-dimensional virtual space simulator, the roles of the avatars and the agents in the virtual space are fixed. Specifically, in the virtual space, the character acting as an avatar consistently acts as the avatar whereas the character acting as an agent consistently acts as the agent. This requires about the same number of users as that of the avatars to participate from the beginning to the end of the simulation.

Further, in the simulation of evacuation for a disaster situation, it is necessary that a large number of avatars be involved in the virtual space, in order to realize a highly realistic and reliable simulation. Thus, in order to perform such large-scale simulation, it is required to find a large number of users and keep them from the beginning to the end of the simulation. This makes the performance of such simulation difficult and costly.

Further, a user who has participated in the simulation from a point of view of a specific avatar is required to stay in the virtual space as an instructor of the avatar throughout the simulation. The user is therefore restricted in the sense that he or she cannot freely and flexibly experience scenes in the virtual space. For example, it is difficult for the user to simultaneously experience different events happening in different places in the virtual space.

In view of the above problems, the present invention has as an object to provide (i) a three-dimensional virtual space simulator, particularly a large-scale three-dimensional virtual space simulation in which a large number of characters participate, that can realize flexible participation modes of users, excellent reality, and high reliability of a three-dimensional virtual space simulation, (ii) a three-dimensional virtual space simulation program, and (iii) a computer-readable storage medium storing the program.

### DISCLOSURE OF INVENTION

In order to achieve the above object, a three-dimensional virtual space simulator according to the present invention is adapted so that the three-dimensional virtual space simulator that displays a virtual space in a three-dimensional image where a plurality of characters including an avatar and an agent, appear, includes: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means.

Further, a three-dimensional virtual space simulator according to the present invention is adapted so that the character displaying means displays a specific character as the avatar or the agent in the virtual space, and switches between the avatar action instruction means and the agent action instruction means in receiving the action instruction data.

Further, a three-dimensional virtual space simulator according to the present invention is adapted so that the three-dimensional virtual space simulator is configured with a plurality of computers that are connected to one another through a network, share a virtual space, and display the virtual space in a three-dimensional image.

Further, a three-dimensional virtual space simulator according to the present invention is adapted so that the three-dimensional virtual space simulator simulates, in the virtual space, evacuation for a disaster situation.

In order to achieve the above object, a three-dimensional virtual space simulation program according to the present invention causes a computer to function as a three-dimensional virtual space simulator that displays a virtual space in a three-dimensional image where a plurality of characters including an avatar and an agent, appear, the three-dimensional virtual space simulation program causing the computer to function as: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means.

Further, in order to achieve the above object, a three-dimensional virtual space simulation program causes a plurality of computers that are connected to one another through a network, share a virtual space, and display a virtual space in three-dimensional image where a plurality of characters including an avatar and an agent, appear, to function as a three-dimensional virtual space simulator, the three-dimensional virtual space simulation program causing the computers to function as: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means.

A computer-readable storage medium according to the present invention stores the three-dimensional virtual space simulation program.

As described above, a three-dimensional virtual space simulator according to the present invention includes: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means.

Further, in a three-dimensional virtual space simulator according to the present invention, the character displaying means displays a specific character as the avatar or the agent in the virtual space, and switches between the avatar action instruction means and the agent action instruction means in receiving the action instruction data.

Accordingly, by switching the two interfaces, the character displaying means can flexibly change a role of a specific character in the virtual space, from an avatar to an agent, or the other way around. For example, an avatar to whom a user has inputted action instructions may start acting as an agent from a middle of the simulation, or a specific agent may start acting as an avatar from a middle of the simulation.

This allows the user to join, leave, or switch flexibly and easily during the simulation. Therefore, a relatively large number of avatars can be involved in a large-scale simulation without keeping a large number of users from the beginning to the end of the simulation. This realizes a highly realistic and reliable simulation.

A three-dimensional virtual space simulation program according to the present invention causes a computer to function as: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means. Further, a computer-readable storage medium according to the present invention stores the three-dimensional virtual space simulation program.

Accordingly, by causing a computer to read and execute the three-dimensional virtual space simulation program, the same effect as that achievable by the three-dimensional virtual space simulator is achieved.

Further, a three-dimensional virtual space simulator according to the present invention is configured with a plurality of computers that are connected to one another through a network, share the virtual space, and display the virtual space in a three-dimensional image.

This allows a plurality of users to simultaneously participate in the simulation using different computers connected through the network, achieving an effect that the users can participate the simulation flexibly. For example, geographically distributed users participate in a simulation at the same time to communicate with each other or share the experience in the virtual space. Another effect is that an unspecified number of users can participate in a simulation at the timing they desire.

Further, a three-dimensional virtual space simulation program according to the present invention causes a plurality of computers that are connected to one another through a network, share a virtual space, and display a virtual space in a three-dimensional image where a plurality of characters including an avatar and an agent appear, to function as a three-dimensional virtual space simulator, the three-dimensional virtual space simulation program causing the computers to function as: avatar action instruction means for determining action of the avatar according to an input made by a user, and creating action instruction data indicating a content of the action; agent action instruction means for autonomously determining action of the agent, and creating action instruction data indicating a content of the action; and character displaying means for displaying the characters in the virtual space according to the action instruction data supplied by the avatar action instruction means or the agent action instruction means. The character displaying means has a common interface for receiving the action instruction data from the avatar action instruction means, and for receiving the action instruction data from the agent action instruction means. Further, a computer-readable storage medium according to the present invention stores the three-dimensional virtual space simulation program.

Accordingly, by causing the plurality of computers to read and execute the three-dimensional virtual space simulation program, the same effect as that achievable by the three-dimensional virtual space simulator can be achieved.

Further, a three-dimensional virtual space simulator according to the present invention simulates in the virtual space evacuation for a disaster situation.

In the simulation of evacuation for the disaster situation, it is important to accurately reproduce group dynamics.

As described above, with the three-dimensional virtual space simulator according to the present invention, a relatively large number of avatars can be involved in a large-scale simulation without keeping a large number of users from the beginning to the end of the simulation. This facilitates to realize a highly realistic and reliable simulation. Further, roles of avatar and agent can be switched freely during the simulation, and therefore the users can participate in the simulation flexibly from various points of view.

This achieves flexibility in patterns of user participation, excellent reality, and high reliability in the simulation of evacuation in the event of a disaster.

Additional objects, features, and strengths of the present invention will be made clear by the description below. Further, the advantages of the present invention will be evident from the following explanation in reference to the drawings.

### BRIEF DESCRIPTION OF DRAWINGS

Figure 1 is a block diagram schematically illustrating a three-dimensional virtual space simulator system according to one embodiment of the present invention.
Figure 2 is an outside view illustrating a user operating a simulator.
Figure 3 is a diagram showing an exemplary screen displaying a three-dimensional virtual space in an image display section of the three-dimensional virtual space simulator.
Figure 4 is a schematic diagram illustrating a character made up of polygons that are joined at 16 joints.
Figure 5 is a conceptual diagram showing a processing flow of a process control section and a graphic process section of the three-dimensional virtual space simulator.
Figure 6 is a block diagram describing how action instruction data and agent status information data are exchanged between (i) an agent action instruction section, and (ii) a process control section and a graphic process section.
Figure 7 is a conceptual diagram illustrating a plurality of simulators sharing VRML data.
Figure 8 is a conceptual diagram that illustrates where action instructions to characters contained in the VRML data come from in a common mode.
Figure 9 is a block diagram illustrating an exemplary method for transmitting and receiving audio data and text data between simulators in a common mode.
Figure 10 is a diagram showing an exemplary screen displaying a three-dimensional virtual space in an image display section of the simulators.
Figure 11 is a diagram showing an exemplary screen in which a top view of the scene of Figure 10 is displayed in three-dimension.

### BEST MODE FOR CARRYING OUT THE INVENTION

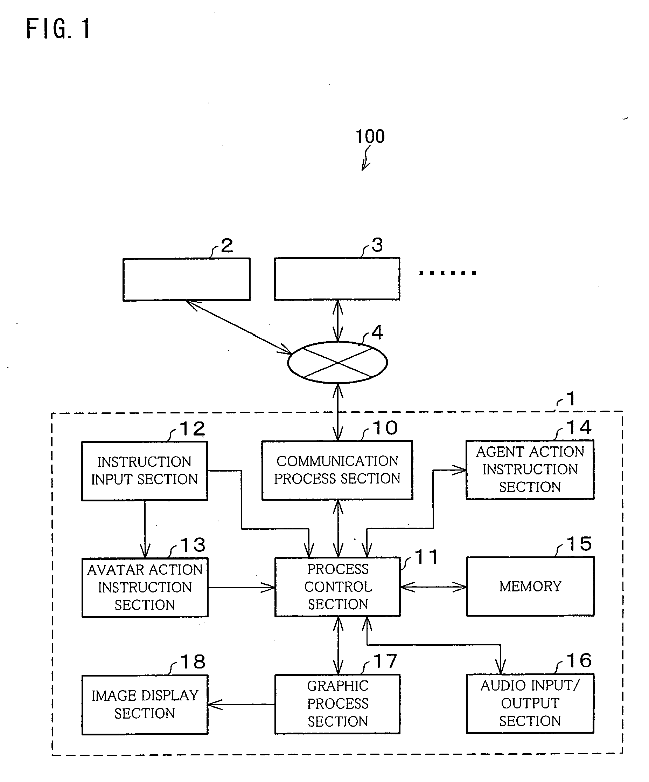

The following explains a three-dimensional virtual space simulator system (three-dimensional virtual space simulator) 100 according to one embodiment of the present invention, with reference to Figures 1 to 10.

### [1. System Configuration]

Figure 1 is a block diagram schematically illustrating the three-dimensional virtual space simulator system 100. As illustrated in the figure, in the three-dimensional virtual space simulator system 100, simulators (three-dimensional virtual space simulator) 1, 2, 3... are connected to one another by a network 4.

The simulators 1, 2, 3... are configured with graphic workstations and/or personal computers available in a market, and have the same internal configuration. In Figure 1, only the internal configuration of the simulator 1 is illustrated, and illustration of those of the other simulators 2, 3 is omitted. The simulators 1, 2, 3... perform data communications through the network 4.

The network 4 is not limited to a specific type of network, and for example the Internet, intranet, extranet, LAN, ISDN, VAN, CATV communications network, virtual private network, telephone circuit network, mobile communication network, or satellite communications network can be adopted as the network 4. Further, a transmission medium constituting the network 4 is not limited to a specific medium, and may be, for example, a wire line (i.e., IEEE 1394, USB, power line communication, cable TV lines, telephone lines, ADSL lines), or wireless communications (i.e., infrared ray (IrDA, remote control), Bluetooth (registered trademark), 802.11 wireless communication, HDR, mobile telephone network, satellite circuit, terrestrial digital network).

### [2. Internal Configuration of Simulator]

First of all, an internal configuration of the simulator 1 will be explained. The simulator 1 is provided with a communication process section 10, a process control section 11, an instruction input section 12, an avatar action instruction section 13, an agent action instruction section 14, a memory 15, an audio input/output section 16, a graphic process section 17, and an image display section 18.

The communication process section 10 is a communication interface that connects the simulator 1 to the network 4, and is constituted of a variety of communication interfaces and communication circuits. The communication process section 10 communicates with an external device using a predetermined protocol such as TCP/IP or UDP/IP. Further, the communication process section 10 may include, in addition to the function of data communications, functions of compression and extraction of various data. All data transmitted between the simulator 1 and the external device are transmitted between the communication process section 10 and the process control section 11.

The process control section (character displaying means) 11 is a functional block that overall controls operations of the components of the simulator 1, and transmission of data between the components. The process control section 11 unifies and controls other functional blocks that will be explained below. The process control section 11 also controls logins and logouts of users.

The instruction input section 12 functions as an input interface of the simulator 1, and is constituted of a keyboard or a mouse. Through the instruction input section 12, the simulator 1 receives various instructions, such as an instruction for an avatar action, that are inputted by a user. In order to improve operability of when the user inputs instructions for an avatar action, it is preferable that the instruction input section 12 include a variety of devices for designating directions, such as a cursor key or an analog joystick. The instruction input section 12 creates instruction input data according to the instructions inputted by the user. Among the created instruction input data, the instruction input section 12 transmits instruction input data regarding the action of avatar to the avatar action instruction section 13, and the rest of the instruction input data is transmitted directly to the process control section 11.

An avatar action instruction section (avatar action instruction means) 13 is a functional block that determines an avatar action for a virtual space and creates action instruction data indicating the contents of the avatar action. This is performed according to the instruction input data regarding the avatar actions, transmitted from the instruction input section 12. The avatar action instruction section 13 transmits the created action instruction data to the process control section 11. The action instruction data outputted from the avatar action instruction section 13 is stored in a buffer memory, and the process control section 11 and the graphic process section 17 read the action instruction data from the buffer memory. In the same manner, avatar status information data created and outputted by the process control section 11 and the graphic process section 17 are stored in the buffer memory, and the avatar action instruction section 13 reads the avatar status information data from the buffer memory.

The agent action instruction section (agent action instruction means) 14 is a functional block that autonomously determines an agent action performed in the virtual space, and creates action instruction data indicating the contents of the agent actions. The agent action instruction section 14 transmits the created action instruction data to the process control section 11. Further, via a buffer memory (not illustrated), the agent action instruction section 14 and the process control section 11 (and the graphic process section 17) exchange the action instruction data created by the agent action instruction section 14, and agent status information data created and updated by the process control section 11 and the graphic process section 17 according to the action instruction data. A way that the agent action instruction section 14 autonomously determines the agent action will be explained later.

The memory 15 is a data storage unit that stores data in various semiconductor memories or storage media. Examples of storage media where the memory 15 stores data include: tapes such as magnetic tapes or cassette tapes; disks including (i) magnetic disks such as floppy (registered trademark) disks or hard disks, and (ii) optical disks such as MO, MD, DVD, or CD-R; and cards such as IC cards (including memory cards), or optical cards.

The process control section 11 causes the memory 15 to store all data that are associated with the three-dimensional virtual space simulation, and reads the data when necessary. Examples of data associated with the three-dimensional virtual space simulation include: data supplied by an external device through the communication process section 10; instruction input data supplied by the instruction input section 12; action instruction data supplied by the avatar action instruction section 13; action instruction data supplied by the agent action instruction section 14; VRML data created by the graphic process section 17 and describing the three-dimensional virtual space; and data obtained by processing the above data.

The audio input/output section 16 is an audio input/output unit for the simulator 1 to output sound to a user and receive an audio input from the user. The audio input/output section 16 is constituted of an audio output unit, such as a headphone or a speaker, and an audio input unit, such as a head mounted microphone or a fixed microphone. The audio input/output section 16 outputs sound according to audio data supplied by the process control section 11, and transmits audio data inputted by the user to the process control section 11. In order to improve reality of the simulation, it is preferable that the audio input/output section 16 input and output stereophonic sound.

The graphic process section (character displaying means) 17 is a functional block that creates VRML data describing a three-dimensional image of the virtual space, updates the VRML data, and causes the image display section 18 to display the virtual space in three-dimension. These operations are performed according to the instructions of the process control section 11.

The graphic process section 17 handles the following types of information: (i) data regarding a static background image in the virtual space (static object information of the VRML data); (ii) data regarding an acting character image in the virtual space (dynamic object information of the VRML data); and information concerning a view point, i.e., location and direction, of the three-dimensional image to be created in the virtual space (camera object information of the VRML data). Based on these types of object information, the graphic process section 17 creates, in real time, the VRML data of the three-dimensional image as viewed from a specific character (normally avatar), and updates the VRML data of the memory 15. Further, the graphic process section 17 creates, according to the updated VRML data of the memory 15, a video signal (animation data) for displaying three-dimensional images of city landscape or people in the virtual space, and transmits the video signal to the image display section 18.

The following explains the static object information, the dynamic object information, and the camera object information.

The static object information is information of a plurality of objects from which a static image that constitutes the virtual space is created. The static object information mainly includes polygon data forming static objects in the virtual space, and graphics context data.

The dynamic object information is information regarding movable character objects in the virtual space. The dynamic object information mainly includes coordinate data of vertices of polygons forming the objects of all characters (avatar and agent). Other main constituents of the dynamic object information include polygon data and graphics context data.

The camera object information is object information indicative of a view point, i.e., location and direction, of the three-dimensional image to be created in the virtual space. The camera object information is mainly includes position vector information that indicates a current location and direction of an avatar in the virtual space, and viewing-direction vector information.

The image display section (character displaying means) 18 is a display by which a three-dimensional virtual space including characters is displayed on the screen according to the video signal supplied by the graphic process section 17. The image display section 18 is realized by, for example, a liquid crystal display or a cathode-ray tube (CRT).

The respective functional blocks of the simulator 1, especially the process control section 11, the avatar action instruction section 13, the agent action instruction section 14, and the graphic process section 17, may be configured based upon a hardware logic or may be realized by a program (software) using an operation unit (such as CPU or MPU). Specifically, other than using the CPU that executes the commands of the control program realizing the respective functions, the simulator 1 may contain the program and its related data in, for example, the memory 15 or a semiconductor memory (e.g., ROM, mask ROM, EPROM, EEPROM, flash ROM), and develop that program with RAM (random access memory), so as to realize the function blocks.

Program codes (object code program, intermediate code program, source program) of the three-dimensional virtual space simulation program that realizes the functional blocks are stored beforehand in, for example, the memory 15 of the simulator 1. Alternatively, the program codes may be supplied to the simulator 1 through a computer-readable storage medium storing the program codes, and the operation unit of the simulator 1 may read and execute the program codes stored in the storage medium. Further, the program codes may be supplied to the simulator 1 through the network 4. The present invention may also be realized in a form of a carrier wave or a data signal sequences on which the program codes are electronically transmitted.

### [3. Switching of Characters in Three-dimensional Virtual Space Simulation]

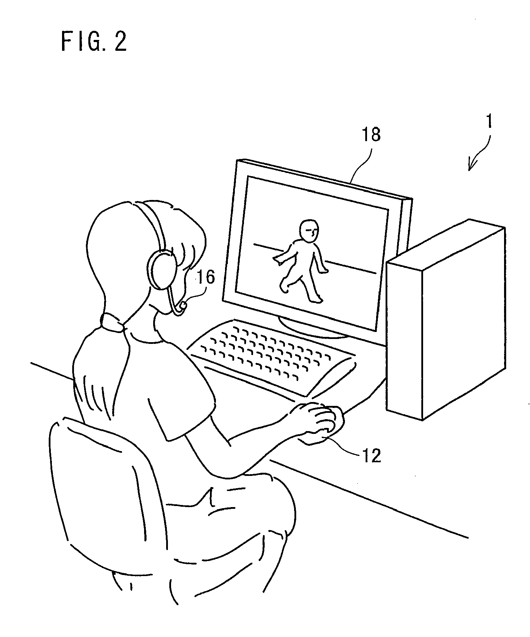

Figure 2 is an outside view illustrating a user operating the simulator 1. As illustrated in the figure, in order to participate in the three-dimensional virtual space simulation, the user operates the instruction input section 12 and inputs an instruction to the simulator 1 while monitoring the displayed image on the image display section 18 and the sound outputted by the audio input/output section 16.

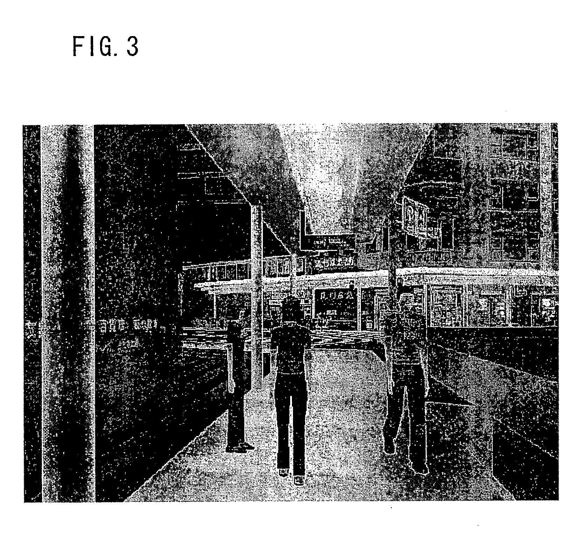

Figure 3 is a diagram illustrating an exemplary image of a three-dimensional virtual space displayed in the image display section 18. The exemplary image shown in the figure includes three characters in a town in the virtual space. Ordinarily, a plurality of characters appear in the virtual space displayed by the three-dimensional virtual space simulator, and each of the characters is either an avatar who acts according to an input made by a user, or an agent who acts autonomously. The user gives an instruction to a specific avatar and experience the virtual space from a view of the avatar. For example, the user instructs the avatar to walk in the virtual space, change directions, or approach and talk to another avatar or an agent. The exemplary image of Figure 3 illustrates the virtual space from the point of view of the avatar being instructed by the user. As such, the avatar instructed by the user is not displayed. However, the avatar instructed by the user may be displayed depending upon the settings.

In the simulator 1, the action instruction data supplied by the avatar action instruction section 13 to the process control section 11 and the graphic process section 17 has the same format as the action instruction data supplied by the agent action instruction section 14 to the process control section 11 and the graphic process section 17. Specifically, in the present invention, the avatar action instruction data and the agent action instruction data have a common format, that is, a common interface for instructing action. The format of the action instruction data includes data regarding, for example, a movement (walking) speed, an angular velocity of a whole body, an angular velocity of the head (sight lines), an angular velocity of an arm with a pointing finger, or types of gesture.

In order to create action instruction data in the foregoing format according to a user input to the instruction input section 12, the avatar action instruction section 13 is provided with a corresponding table of user inputs and action instruction data. In the corresponding table, contents of the action instruction data to be created according to the input (for example, type of a pressed key) to the instruction input section 12 are predetermined. TABLE 1 shows an example a corresponding table storing a correspondance between (i) inputs (here, types of pressed keys) to the instruction input section 12 and (ii) action instruction data to be created.

**<TABLE 1 >**

| (TYPE OF PRESSED KEY) | (BEHAVIOR INSTRUCTION DATA TO BE CREATED) |
|---|---|
| UP CURSOR | INCREASE 10 UNITS IN MOVEMENT (WALKING) SPEED |
| DOWN CURSOR | REDUCE 10 UNITS IN MOVEMENT (WALKING) SPEED |
| RIGHT CURSOR | INCREASE 5 UNITS IN ANGULAR VELOCITY OF ENTIRE BODY |
| LEFT CURSOR | REDUCE 5 UNITS IN ANGULAR VELOCITY OF ENTIRE BODY |
| "Q" | INCREASE 8 UNITS IN ANGULAR VELOCITY OF HEAD (SIGHT LINES) |
| "W" | REDUCE 8 UNITS IN ANGULAR VELOCITY OF HEAD (SIGHT LINES) |
| "A" | INCREASE 15 UNITS IN ANGULAR VELOCITY OF ARM WITH POINTING FINGER |
| "S" | REDUCE 15 UNITS IN ANGULAR VELOCITY OF ARM WITH POINTING FINGER |
| "1" | MAKE GESTURE NO. 1 (GESTURE OF "COME") |
| "2" | MAKE GESTURE NO. 2 (GESTURE OF "STOP") |

On the other hand, the agent action instruction section 14 autonomously determines the action of an agent in the virtual space, and creates action instruction data in the foregoing format using a control command defined as API (application programming interface), as will be described later. TABLE 2 shows an example of a correspondance between control commands and action instruction data to be created.

**<TABLE 2>**

| (CONTROL COMMAND) | (BEHAVIOR INSTRUCTION DATA TO BE CREATED) |
|---|---|
| walk(x,y) | MOVEMNT (WALKING) SPEED, WHERE (x,y) IS THE COORDINATES OF DESTINATION |
| turn(r) | ANGULAR VELOCITY OF ENTIRE BODY, WHERE (r) IS A DESIRED DIRECTION ANGLE |
| face(r) | ANGULAR VELOCITY OF HEAD (SIGHT LINE), WHRER (r) IS A DESIRED DIRECTION ANGLE |
| point(r) | ANGULAR VELOCITY OF ARM WITH POINTING FINGER, WHERE (r) IS A DESIRED DIRECTION ANGLE |
| gesture(k) | TYPE OF GESTURE, WHERE (k) IS A GESTURE NUMBER |

It can be seen from the comparison between TABLE 1 and TABLE 2 that the format of the action instruction data created by the avatar action instruction section 13 is the same as that of the action instruction data created by the agent action instruction section 14.

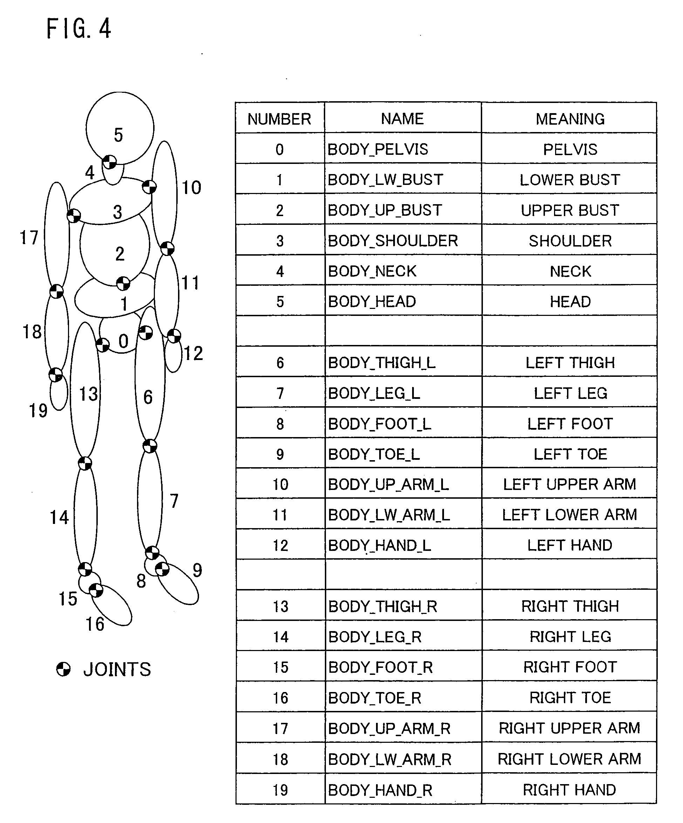

The process control section 11 is supplied with the action instruction data, and creates, according to the action instruction data, VRML data for displaying an image that contains information such as locations of characters (coordinates for placing a human model on a world coordinate system) or directions of characters (angles of the human model in the world coordinate system). In the VRML data of the present embodiment for displaying images, each character is expressed by a structure in which polygons are joined at 16 joints. Figure 4 is a schematic diagram illustrating a character of polygons that are joined at 16 joints. In the table of the figure, "NUMBER" indicates serial numbers given to the polygons, "NAMES" indicate parameter names given to the polygons, and "MEANING" describe the polygons with reference to the corresponding part of the human body. The process control section 11 changes, according to the action instruction data, the directions or locations of the polygons while utilizing the joints of the character as pivots.

The VRML data created by the process control section 11 in the way as described above is transmitted to the graphic process section 17, and according to the VRML data, the graphic process section 17 creates animation data. The graphic process section 17 carries out a rendering process to combine the characters with a background, thereby creating three-dimensional image animation data.

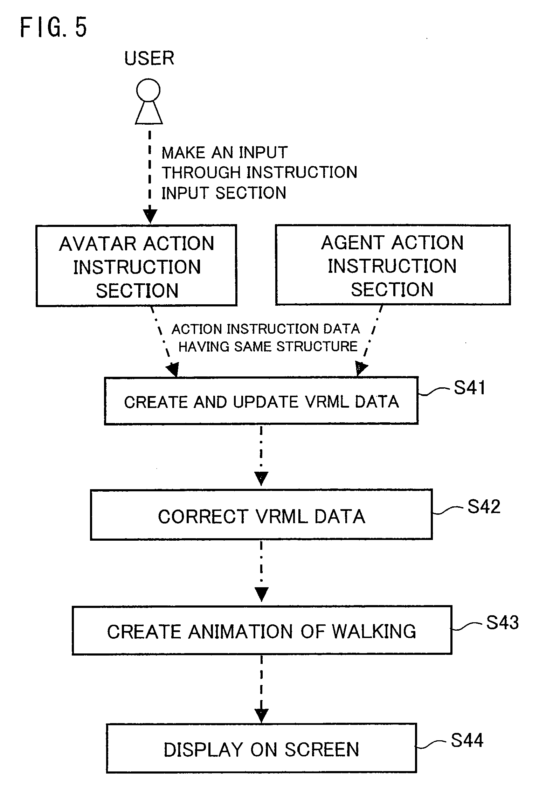

Figure 5 is a conceptual diagram describing how data are exchanged between the process control section 11 and the graphic process section 17. As illustrated in the figure, the process control section 11 and the graphic process section 17 are each provided with an interface through which the action instruction data, either from the avatar action instruction section 13 or the agent action instruction section 14 but having the same structure (format), is supplied. The process control section 11 and the graphic process section 17 create and update the VRML data (camera object information and dynamic object information) regarding an avatar when the action instruction data is supplied from the avatar action instruction section 13. On the other hand, the process control section 11 and the graphic process section 17 create and update the VRML data (dynamic object information) regarding an agent when the action instruction data is supplied from the agent action instruction section 14 (S41).

Then, the process control section 11 and the graphic process section 17 correct the VRML data (camera object information and dynamic object information) created and updated in step S41, such that the characters act more naturally in the virtual space. The correction is made in such a way as to, for example, avoid colliding with another character or adapt the walking speed to the landform of the walking path (S42).

Subsequently, the process control section 11 and the graphic process section 17 create, according to the VRML data corrected in step S42, an image "signal" of the animation that expresses the walking motion of the character (S43), and transmits the image signal to the image display section 18 to cause the image display section 18 to display the animation on its screen (S44).

With regard to actions that stay with the character for a certain period of time such as walking, it is preferable to repeat the procedures of steps S41 to S44 at short time intervals, so that the animation is displayed naturally.

As described above, in the simulator 1, the data structure of the action instruction data supplied from the avatar action instruction section 13 to the process control section 11 and the graphic process section 17 is the same as that of the action instruction data supplied from the agent action instruction section 14 to the process control section 11 and the graphic process section 17. Thus, the process control section 11 and the graphic process section 17 use a common interface to receive the action instruction data from the avatar action instruction section 13, and the action instruction data from the agent action instruction section 14.

Further, the process control section 11 and the graphic process section 17 display a specific character as an avatar or an agent in the virtual space, and can switch between the avatar action instruction section 13 and the agent action instruction section 14 in receiving the action instruction data. More specifically, the process control section 11 and the graphic process section 17 can switch between the avatar action instruction section 13 and the agent action instruction section 14 in receiving the action instruction data, so that a specific character in the virtual space can be switched between an avatar and an agent. The character may be switched according to an instruction inputted by a user via the instruction input section 12, or may be switched automatically when a predetermined condition, such as an elapse of a certain period of time, is satisfied.

### [4. Control of Agent]

The following describes how the agent action instruction section 14 (see Figure 1) autonomously determines the agent actions in the virtual space.

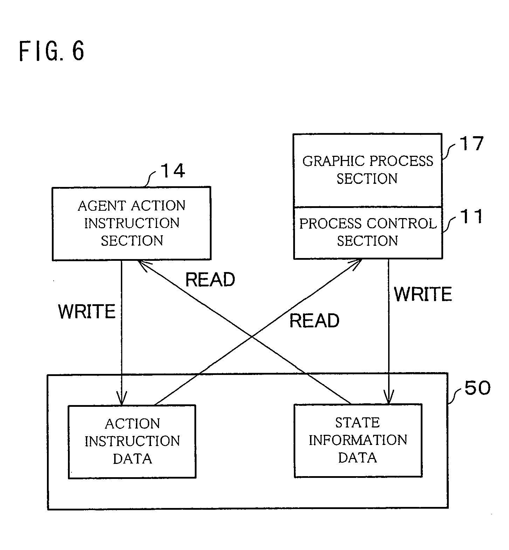

As illustrated in Figure 6, (i) the agent action instruction section 14, and (ii) the process control section 11 and the graphic process section 17 exchange, through the buffer memory 50, the action instruction data created by the agent action instruction section 14, and the status information data (dynamic object information) created and updated by the process control section 11 and the graphic process section 17 according to the action instruction data.

Specifically, when the agent action instruction section 14 writes the agent action instruction data in the buffer memory 50, the process control section 11 and the graphic process section 17 read the action instruction data. On the other hand, when the process control section 11 and the graphic process section 17 write the created and updated agent status information data (dynamic object information) in the buffer memory 50, and the agent action instruction section 14 reads the status information data and obtains a feedback.

The agent action instruction section 14 stores status information for controlling the action of the agent. Such state information includes a variety of object information (camera object information, static object information, dynamic object information) included in the VRML data, and agent inner state information (for example, parameters indicating knowledge, emotion, character, etc.). Further, the agent action instruction section 14 instructs, when necessary, the agent to confirm a current situation (the act of confirmation will be referred to as "cue" hereinafter). Specifically, the agent action instruction section 14 supplies the "cue" data to the process control section 11 and the graphic process section 17, thereby referring to the object information or obtaining a result of determination based upon the object information.

The agent action instruction section 14 instructs the agent to confirm the current status according to, for example, the "cue" of the TABLE 3 to refer to the object information or the result of determination based upon the object information.

**<TABLE 3>**

| (TYPE OF CUE) | (DETAILS OF CONFIRMATION OF CURRENT SITUATION) |
|---|---|
| "position" | PHYSICAL RELATIONSHIP WITH RESPECT TO TARGET |
| "observe" | CURRENT BEHAVIOR OF TARGET |
| "hear" | AUDIO INFORMATION OF SURROUNDING AREA |

The agent action instruction section 14 applies the object information and the internal status information to a predetermined rule (scenario) to determine a subsequent action of the agent. In other words, the rule of the agent action is previously established in the form of scenario in the agent action instruction section 14, and the agent action instruction section 14 applies the object information and the agent internal status information at that time to the scenario to interpret. As a result, the agent action instruction data or the "cue" data is sequentially supplied to the process control section 11 and the graphic process section 17.

As described above, the agent action instruction section 14 creates the agent action instruction data according to the predetermined scenario. This facilitates establishing flexible patterns of the agent action by changing the scenario. Further, if the scenario is established in such a way as to assimilate the action of the agent in the virtual space to that of human being in the real world, then the simulation would proceed more naturally.

### [5. Mode of Simulation in Common Mode]

In the three-dimensional virtual space simulator system 100 (see Figure 1), the three-dimensional virtual space simulation may be executed solely by the simulator 1. Alternatively, the simulator 1, the simulator 2, the simulator 3... (see Figure 1) may execute the simulation while performing data communications and sharing the three-dimensional virtual space.

While the foregoing explained the three-dimensional virtual space simulation executed solely by the simulator 1, the following will explain a simulation mode of the three-dimensional virtual space simulation executed by the simulator 1, the simulator 2, and the simulator 3... sharing the three-dimensional virtual space (this mode will be referred to as a "common mode" for convenience).

In the common mode, the simulator 1, the simulator 2, and the simulator 3... share, by interactive communications via the network 4, the VRML data created by their respective process control sections 11 and the graphic process sections 17. In other words, the VRML data updated by the process control sections 11 and the graphic process sections 17 (see Figure 1) is shared between the simulators by the peer-to-peer communications via the network 4.

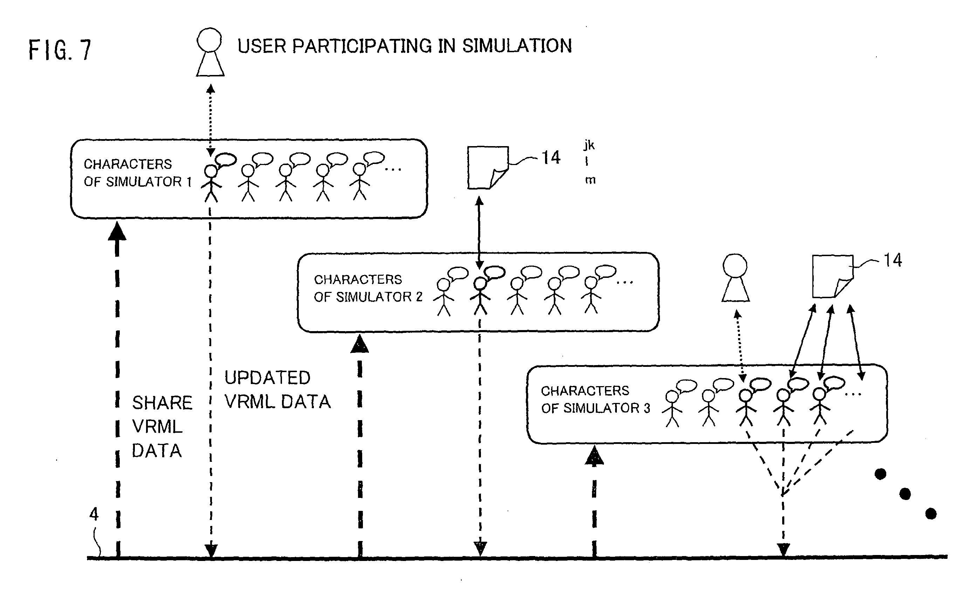

Figure 7 is a conceptual diagram illustrating the simulators 1 to 3 sharing the updated VRML data. In the figure, the simulators 1 to 3 share virtual spaces where five characters appear. The characters are: an avatar whose action instruction data is created by the avatar action instruction section 13 (see Figure 1) according to an operation performed by a user of the simulator 1; an agent whose action instruction data is created by the agent action instruction section 14 (see Figure 1) of the simulator 2; an avatar whose action instruction data is created by the avatar action instruction section 13 (see Figure 1) according to an operation performed by a user of the simulator 3; and two agents whose action instruction data are created by the agent action instruction section 14 (see Figure 1) of the simulator 3. Each of the simulators 1 to 3 causes the process control section 11 and the graphic process section 17 to sequentially transmit, via the network 4, the updated VRML data to the other simulators so that the simulators share all of the updated data. According to the shared VRML data, each of the simulators 1 to 3 displays a three-dimensional image in its image display section 18.

As mentioned above, the simulators only transmit and receive the updated VRML data. This enables a substantially real-time sharing of the VRML data of the three-dimensional virtual spaces while reducing the communication load on the network 4 relatively low.

In the above explanation, the simulators share the VRML data by the peer-to-peer communications, but the communications and sharing of the VRML data are not limited to this configuration; the VRML data may be transmitted/received and shared via a server computer connected to the network 4. In the case where the server computer is adopted, it is preferable that the updated data supplied by the simulators, and various kinds of management information be registered with the server computer. Examples of the management information to be registered with the server computer include: logins and logouts information of the simulators; and information regarding which simulator creates the action instruction data for which character in the virtual spaces. Such management information may be registered with the simulator instead of the server computer, which is independent from the simulators.

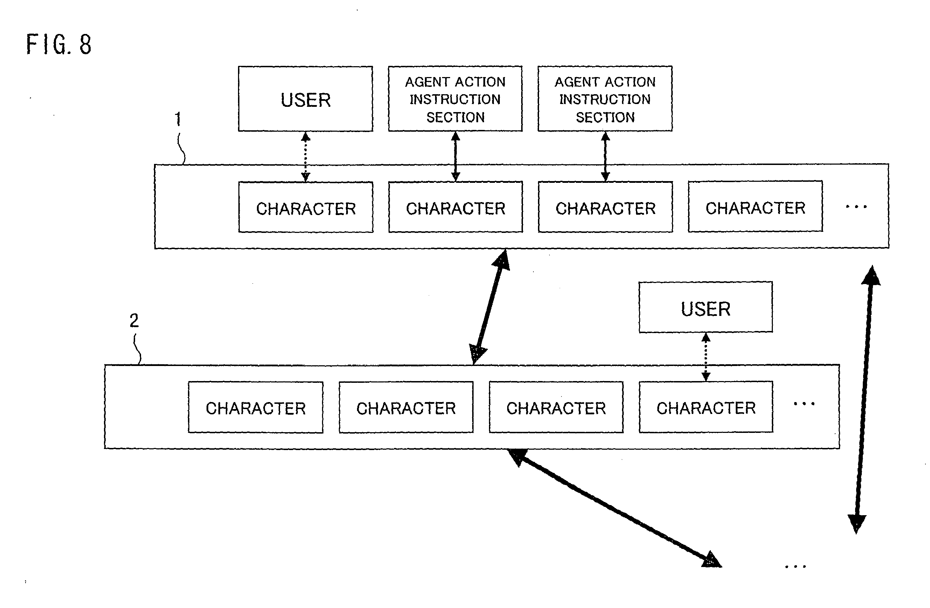

Figure 8 is a conceptual diagram illustrating where the action instructions for characters contained in the VRML data come from in the common mode in which the VRML data is shared by the simulators 1, 2.... In the example illustrated in the figure, with the simulator 1, the user provides a action instruction to one character (avatar) through the avatar action instruction section 13 (see Figure 1), whereas the agent action instruction section 14 (see Figure 1) provides action instructions to two characters (agents), among the shared characters. On the other hand, with the simulator 2, the user provides a action instruction to one character (avatar) through the avatar action instruction section 13 (see Figure 1). According to the present invention, even in the common mode, the process control sections 11 and the graphic process sections 17 of the simulators display a specific character as an avatar or an agent in the virtual space, as described above, and switch between the avatar action instruction section 13 and the agent action instruction section 14 in receiving the action instruction data. Accordingly, by switching between the avatar action instruction section 13 and the agent action instruction section 14 in receiving the action instruction data, the process control sections 11 and the graphic process sections 17 can flexibly switch a specific character in the virtual space between the avatar and the agent.

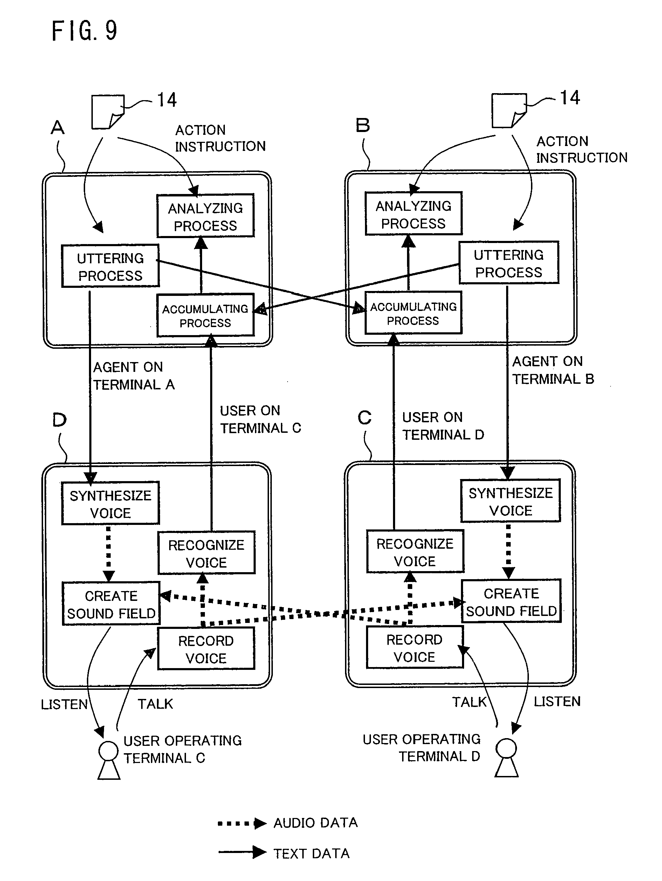

Meanwhile, in a case where characters make a conversation in the common mode, it is preferable that the conversation be made of sound (audio data) if the listener is an avatar (user), whereas it is preferable that the conversation be made of text information (text data) if the listener is an agent. Figure 9 is a block diagram illustrating a method for transmitting and receiving the audio data and the text data between the simulators in the common mode. In the figure, the simulators are indicated as "A", "B", "C", "D". In the simulators A and B, agents act, whereas in the simulators C and D, avatars act. It follows from this: a conversation between the simulators A and B is between an agent and another agent; a conversation between the simulators B and C is between an agent and an avatar; a conversation between the simulators C and D is between an avatar and another avatar; and a conversation between the simulators A and D is between an avatar and an agent.

In the figure, if at least one of the characters making the conversation is an agent, the data transmitted and received between the simulators is in the form of the text data. Specifically, in the conversation between the avatar and the agent, the audio data of the avatar (user) is converted into the text data by performing a voice recognition process, and the text data is transmitted to the agent. This is because the text data is easier to analyze than the audio data. On the other hand, with regard to the conversation between avatars (users), the audio data is transmitted to allow the users to talk to each other with their own voice, thereby improving the reality of the simulation. These conversations are processed by the communication process sections 10, the process control sections 11, and the audio input/output sections 16 (see Figure 1) of the simulators.

### [6. Exemplary Application to Evacuation Simulation]

Finally, the following describes an exemplary case in which a three-dimensional virtual space simulator system 100 (see Figure 1) according to the present embodiment is applied to an evacuation simulation for a disaster situation. Here, six simulators were used in the common mode to simulate a situation where 20 characters tried to escape from a basement. For example, scenarios such as "when an evacuee approaches, walk while pointing a finger at an exit" were suitably developed and combined, so as to construct an evacuation simulation for a disaster situation.

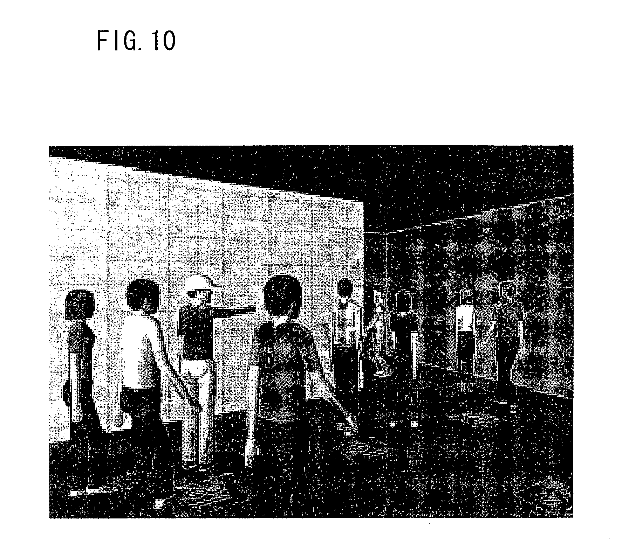

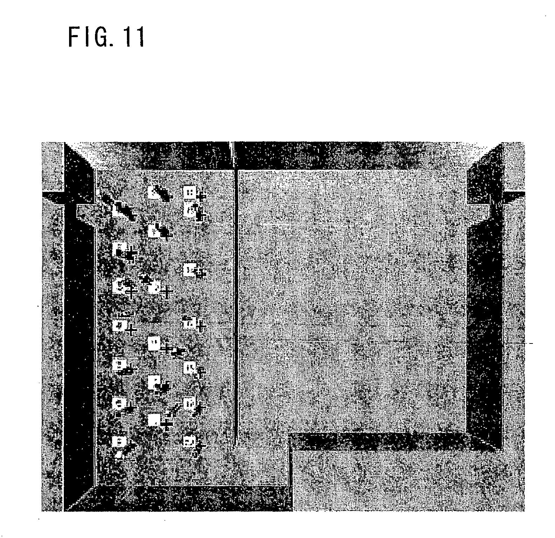

Figure 10 is a diagram showing an exemplary screen displaying a three-dimensional virtual space in the displaying section 18 (see Figure 1) of each simulator during the execution of the evacuation simulation. Further, Figure 11 is a diagram showing an exemplary screen in which a top view of the scene of Figure 10 is displayed in three-dimension. The image display sections 18 of each simulator may display, when necessary, a radar screen, which is a small display utilized for confirming positions of surrounding characters, or a rear-view display, which is a small display for displaying a rear-view image that is not normally displayed.

Then, during the simulation, a specific agent among the 20 agents was designated and switched to an avatar according to a user instruction to the simulator. All of the six simulators did the switching, and consequently six out of the 20 agents became avatars. The simulation was continued thereafter. As a result, the users were able to keep executing the evacuation simulation naturally without strong consciousness on whether the character in the vicinity is an avatar or an agent. The simulation was repeated for several tens of times while changing the users participating in the simulation, and the same result was obtained regardless of the personal characters or a combination of the users participating in the simulation.

The present invention is not limited to the above embodiment, and may be modified in various ways within the scope of the claims set forth below. For example, the VRML language is adopted in the above embodiment to express a three-dimensional image, but the data format etc. is not limited to those adopted in the above embodiment, and any suitable languages and formats may be adopted.

### (Closing Words)

The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The present invention is applicable to a three-dimensional virtual space simulation that displays, in a three-dimensional image, a virtual space where a plurality of characters appear. The present invention is suitable especially for a large-scale simulation such as a simulation of evacuation in an event of a disaster.

## Claims

1. A three-dimensional virtual space simulator that displays a virtual space in a three-dimensional image where a plurality of characters including an avatar and an agent, appear,
the three-dimensional virtual space simulator comprising:
avatar action instruction means for determining action of the avatar according to an input made by a user, and creating action instruction data indicating a content of the action;
agent action instruction means for autonomously determining action of the agent, and creating action instruction data indicating a content of the action; and
character displaying means for displaying the characters in the virtual space according to the action instruction data supplied by the avatar action instruction means or the agent action instruction means,
the character displaying means having a common interface for receiving the action instruction data from the avatar action instruction means, and for receiving the action instruction data from the agent action instruction means.

2. A three-dimensional virtual space simulator as set forth in Claim 1, wherein the character displaying means displays a specific character as the avatar or the agent in the virtual space, and switches between the avatar action instruction means and the agent action instruction means in receiving the action instruction data.

3. A three-dimensional virtual space simulator as set forth in Claims 1 or 2, wherein the three-dimensional virtual space simulator is configured with a plurality of computers that are connected to one another through a network, share a virtual space, and display the virtual space in a three-dimensional image.

4. A three-dimensional virtual space simulator as set forth in one of Claims 1 to 3, wherein the three-dimensional virtual space simulator simulates, in the virtual space, evacuation for a disaster situation.

5. A three-dimensional virtual space simulation program for causing a computer to function as a three-dimensional virtual space simulator that displays a virtual space in a three-dimensional image where a plurality of characters including an avatar and an agent, appear,
the three-dimensional virtual space simulation program causing the computer to function as:
avatar action instruction means for determining action of the avatar according to an input made by a user, and creating action instruction data indicating a content of the action;
agent action instruction means for autonomously determining action of the agent, and creating action instruction data indicating a content of the action; and
character displaying means for displaying the characters in the virtual space according to the action instruction data supplied by the avatar action instruction means or the agent action instruction means,
the character displaying means having a common interface for receiving the action instruction data from the avatar action instruction means, and for receiving the action instruction data from the agent action instruction means.

6. A three-dimensional virtual space simulation program for causing a plurality of computers that are connected to one another through a network, share a virtual space, and display a virtual space in a three-dimensional image where a plurality of characters including an avatar and an agent, appear, to function as a three-dimensional virtual space simulator,
the three-dimensional virtual space simulation program causing the computers to function as:
avatar action instruction means for determining action of the avatar according to an input made by a user, and creating action instruction data indicating a content of the action;
agent action instruction means for autonomously determining action of the agent, and creating action instruction data indicating a content of the action; and
character displaying means for displaying the characters in the virtual space according to the action instruction data supplied by the avatar action instruction means or the agent action instruction means,
the character displaying means having a common interface for receiving the action instruction data from the avatar action instruction means, and for receiving the action instruction data from the agent action instruction means.

7. A computer-readable storage medium storing the three-dimensional virtual space simulation program set forth in Claim 5 or 6.
